# EUROPEAN PATENT SPECIFICATION

(11) **EP 1 901 469 B1**
(45) Date of publication and mention of the grant of the patent: **17.11.2010**
(21) Application number: 06425636.5
(22) Date of filing: 15.09.2006
(51) Int. Cl.: H04L 1/00, H04L 1/16

(54) **A method for communication in wireless systems, related equipment and computer program product**
Verfahren zur drahtlosen Kommunikation, eine dazugehörige Vorrichtung und ein Computerprogrammprodukt
Un procédé de communication dans un système sans fil, équipement associé et produit de programme informatique associé

(43) Date of publication of application: 19.03.2008
(73) Proprietor: Nokia Siemens Networks S.p.A., 20060 Cassina de'Pecchi (MI) (IT)
(72) Inventor: Cavalli, Giulio, 20159 Milano (IT); Maggi, Giovanni, 20159 Milano (IT)
(74) Representative: Weidel, Gottfried

(56) References cited:
- WO-A-01/22646
- WO-A-2005/064839

## Description

### Field of the invention

The invention relates to communication in wireless systems, and was developed with specific attention paid to its possible use in those systems that use ARQ features.

### Description of the related art

ARQ (Automatic Repeat reQuest) is a communication feature where the receiver asks the transmitter to resend a block or frame because errors were detected at the receiver or simply confirms the correct transmission of blocks.

The IEEE 802.16 standard includes ARQ functionalities and describes protocols and messages to manage this feature. The feedback messages that the receiver sends to the transmitter can have different formats depending on the variant of the ARQ protocol adopted.

In general terms, the information transmitted is divided in ARQ blocks, and the feedback messages provided for in the 802.16 standard can be of any of the following types:
- selective: each block is acknowledged singularly;
- cumulative: all the blocks received before a specified number included in the feedback message are considered correctly received;
- cumulative with selective: the blocks received before a specified number included in the ARQ Feedback Information Element (IE) are considered correctly received and the subsequent blocks are acknowledged singularly;
- cumulative with block sequence: all the blocks received before a specified number (included in the ARQ Feedback IE) are considered correctly received, the subsequent blocks are grouped in sequences that are considered either "errored" (i.e. affected by error) or "OK" (i.e. correctly received).

In a wireless environment, due to the burst-like nature of the errors, the most efficient ARQ method is the one previously defined as "cumulative with block sequence". In current broadband systems (i.e. a system having a high throughput) the ARQ feedback windows are not wide enough for efficiently adopting the "cumulative with block sequence", and this inevitably leads to the "cumulative with block sequence" approach being used in an inefficient manner.

The 802.16 standard also specifies that a plurality of feedback messages can be concatenated in order to extend the acknowledged window.

A problem related with this approach lies in that the "second" feedback message in a plurality of feedback messages thus concatenated cannot contain a cumulative field, as this will invalidate the second and following feedback messages: in fact, such a second message would contradict the first one with two different types of feedback information on the ARQ blocks.

For that reason, the feedback messages that follow the first one in a plurality of concatenated feedback messages can only be of the selective type. This is not very practical since the selective method (wherein each block is acknowledged singularly) is inefficient for very large windows due to the high number of individual acknowledgement messages that are generated.

Document 2005/064839 A1 discloses a method for generating a feedback message for ARQ, the method including recording an ACK type in a first field, recording the estimated last block sequence number in a second field, recording the number of groups of successively ACKed blocks as the number of ACK MAPs in a third field, recording the start block sequence number of the respective ACK MAPs in a fourth field, recording the lengths of the respective ACK MAPs in a fifth field and sending a feedback message including information on the first to fifth fields.

### Object and summary of the invention

The object of the invention is thus to provide an improved solution that dispenses with the inefficiencies outlined in the foregoing.

According to the present invention, that object is achieved by means of a method having the features set forth in the claims that follow. The invention also relates to corresponding equipment (i.e. a receiver and a transmitter adapted to implement the method of the invention and a related network) as well as a related computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/modular fashion.

The claims are an integral part of the disclosure of the invention provided herein.

A preferred embodiment of the arrangement described herein is thus an arrangement using an ARQ feedback that makes the "cumulative with block sequence" approach suitable for use also in broadband systems having a high throughput. Using such an extended ARQ feedback leads to overcoming any possible ARQ weakness related to limited sequence capability.

In an alternative embodiment, only the "block sequence" acknowledgement method is used following the "cumulative with block sequence" acknowledgment method. It will be appreciated that the block sequence method is not currently contemplated in the standard.

Both these embodiments are implemented by redefining the meaning of a redundant bit (the first one, i.e. the most significant bit, of the first Sequence ACK Map included in the first ACK Map of every first ARQ_Feedback_IE). The mentioned bit is per se redundant (its value is conventionally always set to 0 in prior art arrangements). Consequently, in the first embodiment considered above, this bit, in combination with a reserved one, is used to extend the block sequence length from 6 bits to 7 bits -- which means from 64 blocks to 128 blocks. In the second embodiment, this bit is set to 1 to indicate that the additional ARQ_feedback_IE are of "block sequence" type.

The arrangement described herein is based on messages/protocol(s) that are essentially aligned with the current framework of e.g. the 802.16 standard and, when implemented, do not require major alterations with respect to the current standard.

### Brief description of the annexed drawings

The invention will now be described, by way of example only, with reference to the enclosed figures of drawing, wherein:
- Figure 1 is a schematic representation of a transmitter and receiver in a link of a communication network, and
- Figure 2 is a schematic exemplary representation of a flow of concatenated feedback messages sent from the receiver to the transmitter of Figure 1.

### Detailed description of preferred embodiments of the invention

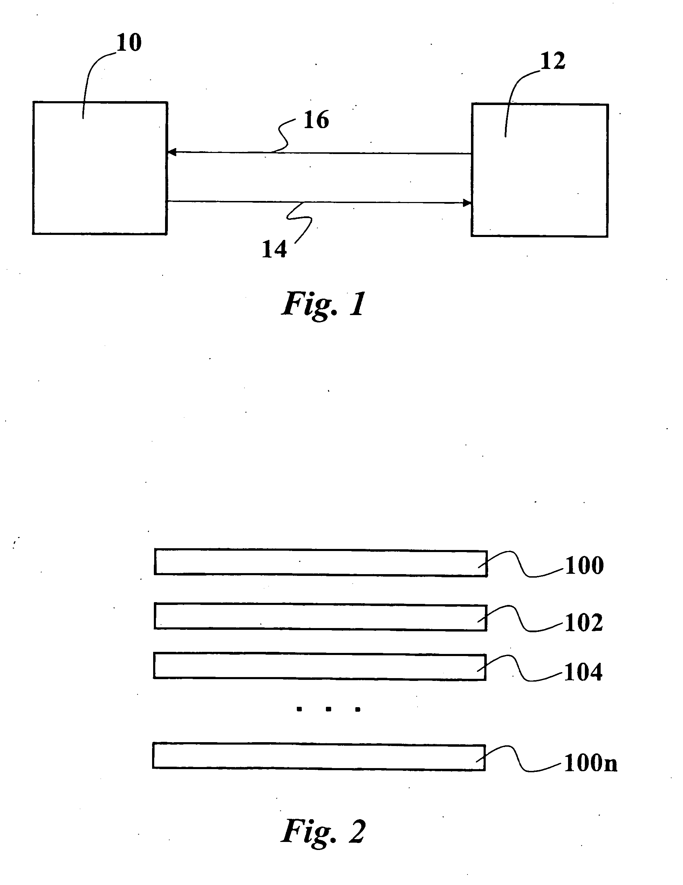

As indicated, Figure 1 is a schematic representation of a transmitter 10 and a receiver 12 in a link of a communication network, such as a network of the type generally conforming with the IEEE 802.16 standard. A so-called WiMAX network is representative of such an exemplary network.

The arrangement shown in Figure 1 employs an ARQ (Automatic Repeat reQuest) feature, namely a communication feature where the receiver 12 may ask the transmitter 10 to resend a block or frame because errors were detected by the receiver 12. Specifically, reference 14 in Figure 1 denotes the information blocks/frames sent from the transmitter 10 to the receiver 12. Conversely, reference 16 denotes the flow of feedback messages sent from the receiver 12 to the transmitter 10 to acknowledge receipt of the blocks/frames in the follow 14 and possibly request retransmission thereof (ARQ) when an error is detected at the receiver 12.

The IEEE 802.16 standard includes ARQ functionalities and describes protocols and messages to handle this feature. The feedback that the receiver sends to the transmitter can have different formats depending on the variant of the ARQ protocol adopted.

Save for the differences detailed in the following, the arrangement described herein can thus adopt essentially the same basic principles and message structures of the existing ARQ protocols currently specified by the IEEE 802.16 standard.

In particular, the feedback message currently provided for in the 802.16 standard can be i.e. of the "cumulative with block sequence" type: in that case, all the blocks received before a specified number are considered correctly received, and the subsequent blocks are grouped in sequences that are considered either "errored" or "OK".

A first embodiment of the arrangement disclosed herein is based on the recognition of the fact that, due to the burst-like nature of the errors, the "cumulative with block sequence" approach is the most efficient ARQ method in a wireless environment is one.

In order to make it possible to use such an ARQ approach efficiently in a broadband system (i.e. a system having a high throughput), the embodiment considered herein provides for using an extended ARQ feedback having a larger sequence capability.

The wording "extended ARQ feedback" denotes an information where an otherwise "redundant" bit in the feedback message (typically the most significant bit of the first Sequence ACK Map included in the first ACK Map of every first ARQ_Feedback_IE - whose value is conventionally always set to 0 in prior art arrangements) is used, typically in combination with a reserved one, to extend the block sequence length from 6 bits to 7 bits -- which means from 64 blocks to 128 blocks.

Terms such as "first ARQ_Feedback_Information Element (IE)", "first ACK Map", and "first Sequence ACK Map" are thoroughly familiar to those of skill in the art of communication networks in compliance with IEEE 802.16 standard, thus making it unnecessary to provide a more detailed description herein. In any case a definition of these terms can be found at Section 6.3.4.2 of the IEEE 802. 16 standard.

As indicated, the feedback messages 16 can be concatenated. Figure 2 schematically shows a set of such concatenated feedback messages including a "first" message 100, followed by a "second" message 102, and - possibly - one or more subsequent messages 104,..., 100n.

In an alternative embodiment of the arrangement described herein, such a set of concatenated messages is used including a message of the "cumulative with block sequence type" as the first feedback message 100 in the set.

This means that, in the first feedback message 100, all the blocks received before a specified number are considered correctly received, and the subsequent blocks are grouped in sequences that are considered either "errored" (i.e. affected by error, detected in a known manner) or "OK" (i.e. correctly received, which again is determined in a known manner).

Conversely, all the subsequent messages 102, 104,... 100n are of a type that can be designated of the "block sequence" type only, namely of a type where the blocks received are grouped in sequences that are considered either "errored" or "OK".

It will be appreciated that such a "block sequence" approach is not currently contemplated in the IEEE 802.16 standard.

In this case, the otherwise "redundant" bit in the feedback message (typically the most significant bit of the first Sequence ACK Map included in the first ACK Map of every first ARQ_Feedback_IE - whose value is conventionally always set to 0 in prior art arrangements) is used. Specifically, this otherwise redundant bit is set to 1 to indicate that that the additional ARQ_feedback_IE are of "block sequence" type.

The arrangement just described, wherein only the "block sequence" method is used after the "cumulative with block sequence" method, enhances the ARQ protocol with a favourable impact on the throughput and efficiency of the system. Additionally, the arrangement just described dispenses with any risk that any feedback message (e.g. the "second" feedback message) in a plurality of concatenated feedback messages would contradict and thus invalidate any earlier (e.g. the "first") feedback message by providing diverging feedback information on the ARQ blocks.

Table 1 below is a schematic representation of the first Sequence ACK Map included in the first ACK Map of every first ARQ_Feedback_IE according to the IEEE 802.16 standard.

The most significant bit therein, designated MSB, is the "redundant" bit repeatedly referred to in the foregoing. In fact, in the message as currently provided for in the standard, such a bit is always set to zero, and is thus per se redundant, i.e. superfluous or pleonastic for the purpose of the message.

**Table 1 - ARQ_Feedback_IE according to Standard 802.16**

| | |
|---|---|
| CID | 0x02 (Connection Identifier) |
| LAST | 0x01 (It is the last ARQ Feedback IE) |
| ACK Type | 0x03 (cumulative with block sequence) |
| BSN | 0x100 (till 0x100 all blocks received correctly) |
| Number of ACK MAPs | 0x01 (two ACK MAP) |
| Sequence Format | 0 |
| Sequence ACK MAP | 01 (this MSB is always zero, i.e. "redundant") |
| Sequence 1 Length | 001111 (15 errors, 6 bit) |
| Sequence 2 Length Reserved | 110111 (55 ok, 6 bit) 0 (spare bit) |
| Sequence Format | 0 |
| Sequence ACK MAP | 10 |
| Sequence 1 Length | 010000 (16 ones positively acknowledging, 6 bit) |
| Sequence 2 Length | 000000 (zeros) |
| Reserved | 0 (spare bit) |

Table 2 below schematically illustrates how such a "redundant" MSB can be exploited (i.e. have useful information associated therewith) according to the first embodiment of the arrangement described herein to extend the block sequence length.

This typically occurs in combination with at least one "reserved" bit).

The block sequence length can thus be extended e.g. from 6 bits to 7 bits -- which means from 64 blocks to 128 blocks.

**Table 2 - ARQ_Feedback_IE according to the first embodiment of the arrangement described herein**

| | |
|---|---|
| CID | 0x02 (Connection Identifier) |
| LAST | 0x01 (It is the last ARQ Feedback IE) |
| ACK Type | 0x03 (cumulative with block sequence) |
| BSN | 0x100 (till 0x100 all blocks received correctly) |
| Number of ACK MAPs | 0x01 (two ACK MAP) |
| Sequence Format | 0 |
| Sequence ACK MAP | 1 (the second sequence is ok) |
| Sequence 1 Length | 0001111 (15 errors, 7 bit) |
| Sequence 2 Length | 1000111 (71 ok, 7 bit) |

It will be appreciated that, by adopting the solution exemplified in Table 2, one can save bandwidth to transmit the same type of information as described in Table 1.

Finally, Table 3 below illustrates how the "redundant" bit (MSB) of Table 1 can be exploited (i.e., again, have useful information associated therewith) to indicate that, in a set of concatenated feedback messages:
- the first message 100 is of the "cumulative with block sequence" type (i.e. all the blocks received before a specified number are considered correctly received), and
- the subsequent blocks are grouped in sequences that are considered either "errored" (i.e. affected by error, detected in a known manner) or "OK" (i.e. correctly received, which again is determined in a known manner) while all the subsequent messages 102, 104,... 100n are of a type that can be designated of the "block sequence" type only, namely of a type where the blocks received are grouped in sequences that are considered either "errored" or "OK".

**Table 3 - ARQ_Feedback_IE according to the second embodiment of the arrangement described herein (i.e. with stand alone "block sequence" type)**

| | |
|---|---|
| CID | 0x02 (Connection Identifier) |
| LAST | 0x00 (It is not the last ARQ Feedback IE) |
| ACK Type | 0x03 (cumulative with block sequence) |
| BSN | 0x100 (till 0x100 all blocks received correctly) |
| Number of ACK MAPs | 0x03 (four ACK MAP) |
| Sequence Format | 0 |
| Sequence ACK MAP | 11 (the MSB is set to one usually is constant zero) |
| Sequence 1 Length | 001111 (15 errors) |
| Sequence 2 Length | 110111 (55 ok) |
| Reserved | 0 (spare bit) |
| Sequence Format | 0 |
| Sequence ACK MAP | 10 |
| Sequence 1 Length | 010000 (16 ones positively acknowledging) |
| Sequence 2 Length | 000000 (zeros) |
| Reserved | 0 (spare bit) |
| Sequence Format | 1 |
| Sequence ACK MAP | XYX |
| Sequence 1 Length | XXXX |
| Sequence 2 Length | YYYY |
| Sequence 3 Length | XXYY |
| Sequence Format | 1 |
| Sequence ACK MAP | XYX |
| Sequence 1 Length | XXXX |
| Sequence 2 Length | YYYY |
| Sequence 3 Length | XXYY |
| CID | 0x02 (Connection Identifier) |
| LAST (second) | 0x01 (It is the last ARQ Feedback IE concatenated) |
| ACK Type | 0x03 (block sequence different meaning of type 0x03) |
| BSN | 0xXYX (BSN of the first block acknowledged) |
| Number of ACK MAPs | 0x00 (one ACK MAP) |
| Sequence Format | 0 |
| Sequence ACK MAP | 10 () |
| Sequence 1 Length | 001111 (15 ok) |
| Sequence 2 Length | 110111 (55 error) |
| Reserved | 0 (spare bit) |

It will be appreciated that, by adopting the solution exemplified in Table 3, quite a significant amount of space is saved in the second concatenated ARQ_FEEDBACK_IE, otherwise we can only use 64 bits in a selective manner. In the case of either embodiment, the different "meaning" attributed to such otherwise redundant bit in the messages sent from the receiver 12 will of course be mirrored by the complementary capacity of the transmitter 10 to "understand" such a meaning and operate accordingly (i.e. by resending blocks indicated as affected by error in the feedback messages from the receiver 12).

Consequently, without prejudice to the underlying principles of the invention, the details and the embodiments may vary, even appreciably, with reference to what has been described by way of example only, without departing from the scope of the invention as defined by the annexed claims.

## Claims

1. A method for communication in a wireless system wherein a receiver (12) sends feedback messages (16) to a transmitter (10), whereby the transmitter (10) can resend information blocks if errors are detected at the receiver (12), such feedback messages including cumulative with block sequence messages type wherein all the blocks received before a specified block sequence number, BSN, are considered correctly received, and the subsequent blocks are grouped in sequences that are considered either affected by error or correctly received, said feedback messages including at least one redundant bit,
the method **characterized in that** it includes the step of selectively varying the value allotted to said at least one redundant bit by exploiting said at least one redundant bit for an operation selected out of:
- extending the block sequence length field in said cumulative with block sequence messages, transmitted in the said feedback messages (16),
- indicating that, in a set of concatenated feedback messages (100, 102, 104, ..., 100n), the first message (100) is in the form of one said cumulative with block sequence feedback message type, and any subsequent message (102, 104, ..., 100n) in the set is in the form of a block sequence feedback message wherein the blocks received are grouped in sequences that are considered either affected by error or correctly received.

2. The method of claim 1, **characterized in that** said block sequence length field is extended from 6 bits to 7 bits.

3. The method of claim 1, **characterized in that** said at least one redundant bit is included in the first ARQ_Feedback_Information Element of said feedback messages.

4. The method of claim 3, **characterized in that** said at least one redundant bit is the most significant bit of the first Sequence ACK Map included in the first ACK Map of said first ARQ_Feedback_Information Element.

5. The method of claim 1, **characterized in that** it includes the step of using at least one reserved bit in combination with said at least one redundant bit for extending the block sequence length in said cumulative with block sequence messages.

6. A receiver for use in a wireless communication system, wherein said receiver (12) is configured for sending feedback messages (16) to a transmitter (10), whereby the transmitter (10) can resend information blocks if errors are detected at the receiver (12), such feedback messages including cumulative with block sequence messages type wherein all the blocks received before a specified block sequence number, BSN, are considered correctly received, and the subsequent blocks are grouped in sequences that are considered either affected by error or correctly received, said feedback messages including at least one redundant bit,
the receiver (12) **characterized by** being configured for selectively varying the value allotted to said at least one redundant bit by exploiting said at least one redundant bit for an operation selected out of:
- extending the block sequence length field in said cumulative with block sequence messages, transmitted in the said feedback messages (16),
- indicating that, in a set of concatenated feedback messages (100, 102, 104, ..., 100n), the first message (100) is in the form of one said cumulative with block sequence feedback message type, and any subsequent message (102, 104, ..., 100n) in the set is in the form of a block sequence feedback message wherein the blocks received are grouped in sequences that are considered either affected by error or correctly received.

7. The method of claim 6, **characterized in that** said block sequence length field is extended from 6 bits to 7 bits.

8. The receiver of claim 6, **characterized by** being configured for using as said at least one redundant bit a bit included in the first ARQ_Feedback_Information Element of said feedback messages.

9. The receiver of claim 8, **characterized by** being configured for using as said at least one redundant bit the most significant bit of the first Sequence ACK Map included in the first ACK Map of said first ARQ_Feedback_Information Element.

10. The receiver of claim 6, **characterized by** being configured for using at least one reserved bit in combination with said at least one redundant bit for extending the block sequence length in said cumulative with block sequence messages.

11. A transmitter for use in a wireless communication system, **characterized in that** said transmitter (10) is configured for receiving said feedback messages (16) from a receiver, whereby the transmitter (10) can resend information blocks if errors are detected at the receiver (12), such feedback messages including cumulative with block sequence messages type wherein all the blocks received before a specified block sequence number, BSN, are considered correctly received, and the subsequent blocks are grouped in sequences that are considered either affected by error or correctly received, said feedback messages including at least one redundant bit,
the transmitter (10) **characterized by** being configured for selectively varying the value allotted to said at least one redundant bit by exploiting said at least one redundant bit for an operation selected out of:
- said cumulative with block sequence messages field with extended block sequence length, transmitted in the said feedback messages (16) ;
- said set of concatenated feedback messages (100, 102, 104, ..., 100n), wherein the first message (100) is in the form of one said cumulative with block sequence feedback message type, and any subsequent message (102, 104, ..., 100n) in the set is in the form of a block sequence feedback message wherein the blocks received are grouped in sequences that are considered either affected by error or correctly received.

12. A wireless communication network including the receiver of any of claims 6 to 10.

13. A computer program product loadable in the memory of at least one computer and including software code portions for performing the method of any of claims 1 to 5.

## Patentansprüche

1. Verfahren zur Kommunikation in einem drahtlosen System, wobei ein Empfänger (12) Rückmeldungen (16) zu einem Sender (10) sendet, wodurch der Sender (10) Informationsblöcke wieder senden kann, wenn Fehler am Empfänger (12) erkannt werden, wobei solche Rückmeldungen mit Blockfolge summierte Nachrichten enthalten, wobei alle vor einer angegebenen Blockfolgenummer BSN empfangenen Blöcke als richtig empfangen angesehen werden und die nachfolgenden Blöcke in Folgen gruppiert werden, die entweder als durch Fehler beeinflusst oder richtig empfangen angesehen werden, wobei diese Rückmeldungen mindestens ein redundantes Bit (MSB) enthalten,
wobei das Verfahren **dadurch gekennzeichnet ist, dass** es den Schritt des gezielten Veränderns des dem mindestens einen redundanten Bit (MSB) zugeteilten Werts durch Ausnutzen dieses mindestens einen redundanten Bits (MSB) für eine Operation enthält, die ausgewählt ist unter:
- Erweitern des Blockfolgelängenfeldes in den mit Blockfolge summierte Nachrichten, übertragen in den Rückmeldungen (16),
- Anzeigen, dass in einer Menge von verketteten Rückmeldungen (100, 102, 104, ..., 100n) die erste Nachricht (100) in der Form der einen mit Blockfolge summierten Rückmeldung ist und jede nachfolgende Nachricht (102, 104, ..., 100n) in der Menge in der Form einer Blockfolge-Rückmeldung ist, wobei die empfangenen Blöcke in Folgen gruppiert sind, die als entweder durch Fehler beeinflusst oder richtig empfangen angesehen werden.

2. Verfahren nach Anspruch 1, **dadurch gekennzeichnet, dass** das Blockfolgelängenfeld von 6 Bit auf 7 Bit erweitert wird.

3. Verfahren nach Anspruch 1, **dadurch gekennzeichnet, dass** das mindestens eine redundante Bit (MSB) in dem ersten ARQ_Feedback_Information-Element der Rückmeldungen enthalten ist.

4. Verfahren nach Anspruch 3, **dadurch gekennzeichnet, dass** das mindestens eine redundante Bit (MSB) das höchstwertige Bit der ersten, in der ersten ACK-Abbildung des ersten ARQ_Feedback_Information-Elements enthaltenen Sequence-ACK-Abbildung ist.

5. Verfahren nach Anspruch 1, **dadurch gekennzeichnet, dass** es den Schritt des Verwendens mindestens eines reservierten Bits in Verbindung mit mindestens einem redundanten Bit (MSB) zum Erweitern der Blockfolgelänge in den mit Blockfolge summierten Nachrichten umfasst.

6. Empfänger zur Verwendung in einem drahtlosen Kommunikationssystem, wobei der Empfänger (12) zum Senden von Rückmeldungen (16) zu einem Sender (10) aufgebaut ist, wodurch der Sender (10) Informationsblöcke wieder senden kann, wenn Fehler am Empfänger (12) erkannt werden, wobei solche Rückmeldungen mit Blockfolge summierte Nachrichten enthalten, wobei alle vor einer angegebenen Blockfolgenummer BSN empfangenen Blöcke als richtig empfangen angesehen werden und die nachfolgenden Blöcke in Folgen gruppiert werden, die als entweder durch Fehler beeinflusst oder richtig empfangen angesehen werden, wobei die Rückmeldungen mindestens ein redundantes Bit (MSB) enthalten,
wobei der Empfänger (12) **dadurch gekennzeichnet ist, dass** er zum gezielten Verändern des dem mindestens einen redundanten Bit (MSB) zugeteilten Wertes durch Ausnutzen mindestens eines redundanten Bits (MSB) für eine Operation aufgebaut ist, die ausgewählt ist unter:
- Erweitern des Blockfolgelängenfeldes in den mit Blockfolge summierten Nachrichten, übertragen in den Rückmeldungen (16),
- Anzeigen, dass in einer Menge verketteter Rückmeldungen (100, 102, 104, ..., 100n) die erste Nachricht (100) in der Form der einen mit Blockfolge summierten Rückmeldung ist und jede nachfolgende Nachricht (102, 104, ..., 100n) in der Menge in der Forme einer Blockfolgerückmeldung ist, wobei die empfangenen Blöcke in Folgen gruppiert werden, die als entweder durch Fehler beeinflusst oder richtig empfangen angesehen werden.

7. Verfahren nach Anspruch 6, **dadurch gekennzeichnet, dass** das Blockfolgelängenfeld von 6 Bit auf 7 Bit erweitert wird.

8. Empfänger nach Anspruch 6, **dadurch gekennzeichnet, dass** er zum Verwenden als das mindestens eine redundante Bit (MSB) eines in dem ersten ARQ_Feedback_Information-Element der Rückmeldungen enthaltenen Bits aufgebaut ist.

9. Empfänger nach Anspruch 8, **dadurch gekennzeichnet, dass** er zum Verwenden als das mindestens eine redundante Bit (MSB) des höchstwertigen Bits der ersten Folge ACK-Abbildung enthalten in der ersten ACK-Abbildung des ersten ARQ_Feedback_Information-Elements aufgebaut ist.

10. Empfänger nach Anspruch 6, **dadurch gekennzeichnet, dass** er zum Verwenden mindestens einen reservierten Bits in Verbindung mit dem mindestens einen redundanten Bit (MSB) zum Erweitern der Blockfolgelänge in den mit Blockfolge summierten Nachrichten aufgebaut ist.

11. Sender zur Verwendung in einem drahtlosen Kommunikationssystem, **dadurch gekennzeichnet, dass** der Sender (10) zum Empfangen der Rückmeldungen (16) von einem Empfänger aufgebaut ist, wodurch der Sender (10) Informationsblöcke wieder senden kann, wenn Fehler am Empfänger (12) erkannt werden, wobei diese Rückmeldungen mit Blockfolge summierte Nachrichten enthalten, wobei alle vor einer angegebenen Blockfolgenummer BSN empfangenen Blöcke als richtig empfangen angesehen werden, und die nachfolgenden Blöcke in Folgen gruppiert werden, die als entweder durch Fehler beeinflusst angesehen oder richtig empfangen angesehen werden, wobei die Rückmeldungen mindestens ein redundantes Bit (MSB) enthalten,
wobei der Sender (10) **dadurch gekennzeichnet ist, dass** er zum gezielten Verändern des dem mindestens einen redundanten Bit (MSB) zugeteilten Wertes durch Ausnutzen des mindestens einen redundanten Bits (MSB) aufgebaut ist, für eine Operation ausgewählt unter:
- dem Feld von mit Blockfolge summierten Nachrichten mit erweiterter Blockfolgelänge, übertragen in den Rückmeldungen (16);
- der Menge von verketteten Rückmeldungen (100, 102, 104, ..., 100n), wobei die erste Nachricht (100) in der Form der einen mit Blockfolge summierten Rückmeldung ist und jede nachfolgende Nachricht (102, 104, ..., 100n) in der Menge in der Form einer Blockfolgerückmeldung ist, wobei die empfangenen Blöcke in Folgen gruppiert sind, die als entweder durch Fehler beeinflusst oder richtig empfangen angesehen werden.

12. Drahtloses Kommunikationsnetz mit dem Empfänger eines beliebigen der Ansprüche 6 bis 10.

13. In den Speicher mindestens eines Computers einladbares Computerprogrammprodukt mit Softwarecodeteilen zum Durchführen des Verfahrens eines beliebigen der Ansprüche 1 bis 5.

## Revendications

1. Procédé de communication dans un système sans fil dans lequel un récepteur (12) envoie des messages de retour d'information (16) à un émetteur (10), d'où il résulte que l'émetteur (10) peut renvoyer des blocs d'information si des erreurs sont détectées au niveau du récepteur (12), de tels messages de retour d'information incluant des messages cumulatifs avec des séquences de blocs, dans lequel tous les blocs reçus avant un numéro de séquence de blocs spécifié, BSN, sont considérés comme correctement reçus, et les blocs suivants sont groupés en séquences qui sont considérées être soit affectées par une erreur, soit correctement reçues, lesdits messages de retour d'information incluant au moins un bit redondant (MSB),
le procédé **caractérisé en ce qu'**il inclut l'étape de variation sélective de la valeur attribuée audit au moins un bit redondant (MSB) en exploitant ledit au moins un bit redondant (MSB) pour une opération choisie parmi :
- l'extension du champ de longueur de séquence de blocs dans lesdits messages cumulatifs avec des séquences de blocs, transmis dans lesdits messages de retour d'information (16),
- l'indication que, dans un ensemble de messages de retour d'information concaténés (100, 102, 104, ..., 100n), le premier message (100) est sous la forme d'un dit message de retour d'information cumulatif avec des séquences de blocs, et tout message subséquent (102, 104, ..., 100n) dans l'ensemble est sous la forme d'un message de retour d'information avec des séquences de blocs dans lequel les blocs reçus sont groupés en séquences qui sont considérées être soit affectées par une erreur, soit correctement reçues.

2. Procédé selon la revendication 1, **caractérisé en ce que** ledit champ de longueur de séquence de blocs est étendu de 6 bits à 7 bits.

3. Procédé selon la revendication 1, **caractérisé en ce que** ledit au moins un bit redondant (MSB) est inclus dans le premier Élément ARQ_Feedback_Information desdits messages de retour d'information.

4. Procédé selon la revendication 3, **caractérisé en ce que** ledit au moins un bit redondant (MSB) est le bit le plus significatif de la première Mappe ACK de Séquence incluse dans la première Mappe ACK dudit premier Élément ARQ_Feedback_Information.

5. Procédé selon la revendication 1, **caractérisé en ce qu'**il inclut l'étape d'utilisation d'au moins un bit réservé en combinaison avec ledit au moins un bit redondant (MSB) pour étendre la longueur de séquence de blocs dans lesdits messages cumulatifs avec des séquences de blocs.

6. Récepteur destiné à une utilisation dans un système de communication sans fil, dans lequel ledit récepteur (12) est configuré pour envoyer des messages de retour d'information (16) à un émetteur (10), d'où il résulte que l'émetteur (10) peut renvoyer des blocs d'information si des erreurs sont détectées au niveau du récepteur (12), de tels messages de retour d'information incluant des messages cumulatifs avec des séquences de blocs, dans lequel tous les blocs reçus avant un numéro de séquence de blocs spécifié, BSN, sont considérés comme correctement reçus, et les blocs suivants sont groupés en séquences qui sont considérées être soit affectées par une erreur, soit correctement reçues, lesdits messages de retour d'information incluant au moins un bit redondant (MSB),
le récepteur (12) **caractérisé en ce qu'**étant configuré pour faire varier sélectivement la valeur attribuée audit au moins un bit redondant (MSB) en exploitant ledit au moins un bit redondant (MSB) pour une opération choisie parmi :
- l'extension du champ de longueur de séquence de blocs dans lesdits messages cumulatifs avec des séquences de blocs, transmis dans lesdits messages de retour d'information (16),
- l'indication que, dans un ensemble de messages de retour d'information concaténés (100, 102, 104, ..., 100n), le premier message (100) est sous la forme d'un dit message de retour d'information cumulatif avec des séquences de blocs, et tout message subséquent (102, 104, ..., 100n) dans l'ensemble est sous la forme d'un message de retour d'information avec des séquences de blocs dans lequel les blocs reçus sont groupés en séquences qui sont considérées être soit affectées par une erreur, soit correctement reçues.

7. Récepteur selon la revendication 6, **caractérisé en ce que** ledit champ de longueur de séquence de blocs est étendu de 6 bits à 7 bits.

8. Récepteur selon la revendication 6, **caractérisé en ce qu'**étant configuré pour utiliser comme ledit au moins un bit redondant (MSB) un bit inclus dans le premier Élément ARQ_Feedback_Information desdits messages de retour d'information.

9. Récepteur selon la revendication 8, **caractérisé en ce qu'**étant configuré pour utiliser comme ledit au moins un bit redondant (MSB) le bit le plus significatif de la première Mappe ACK de Séquence incluse dans la première Mappe ACK dudit premier Élément ARQ_Feedback_Information.

10. Récepteur selon la revendication 6, **caractérisé en ce qu'**étant configuré pour utiliser au moins un bit réservé en combinaison avec ledit au moins un bit redondant (MSB) pour étendre la longueur de séquence de blocs dans lesdits messages cumulatifs avec des séquences de blocs.

11. Émetteur destiné à une utilisation dans un système de communication sans fil, **caractérisé en ce que** ledit émetteur (10) est configuré pour recevoir lesdits messages de retour d'information (16) d'un récepteur, d'où il résulte que l'émetteur (10) peut renvoyer des blocs d'information si des erreurs sont détectées au niveau du récepteur (12), de tels messages de retour d'information incluant des messages cumulatifs avec des séquences de blocs, dans lequel tous les blocs reçus avant un numéro de séquence de blocs spécifié, BSN, sont considérés comme correctement reçus, et les blocs suivants sont groupés en séquences qui sont considérées être soit affectées par une erreur, soit correctement reçues, lesdits messages de retour d'information incluant au moins un bit redondant (MSB),
l'émetteur (10) **caractérisé en ce qu'**étant configuré pour faire varier sélectivement la valeur attribuée audit au moins un bit redondant (MSB) en exploitant ledit au moins un bit redondant (MSB) pour une opération choisie parmi :
- ledit champ de messages cumulatifs avec des séquences de blocs avec une longueur de séquence de blocs étendue, transmis dans lesdits messages de retour d'information (16) ;
- ledit ensemble de messages de retour d'information concaténés (100, 102, 104, ..., 100n), dans lequel le premier message (100) est sous la forme d'un dit message de retour d'information cumulatif avec des séquences de blocs, et tout message subséquent (102, 104, ..., 100n) dans l'ensemble est sous la forme d'un message de retour d'information avec des séquences de blocs dans lequel les blocs reçus sont groupés en séquences qui sont considérées être soit affectées par une erreur, soit correctement reçues.

12. Réseau de communication sans fil incluant le récepteur selon l'une quelconque des revendications 6 à 10.

13. Produit de programme informatique chargeable dans la mémoire d'au moins un ordinateur et incluant des parties de code logiciel pour exécuter le procédé selon l'une quelconque des revendications 1 à 5.
